# FASCICULE DE BREVET EUROPEEN

(11) **EP 3 420 236 B1**
(45) Date de publication et mention de la délivrance du brevet: **09.02.2022**
(21) Numéro de dépôt: 17709157.6
(22) Date de dépôt: 17.02.2017
(51) Int. Cl.: F04D 29/02, F04D 29/16, B29C 43/28, F01D 11/12, B05C 11/02, B05C 17/02, B29C 43/46, B05C 7/00

(54) **DISPOSITIF D'APPLICATION DE MATÉRIAU ABRADABLE SUR UNE SURFACE D'UN CARTER DE TURBOMACHINE**
VORRICHTUNG ZUM AUFBRINGEN VON ABREIBBAREM MATERIAL AUF EINE OBERFLÄCHE EINES TURBOMASCHINENGEHÄUSES
DEVICE FOR APPLYING ABRADABLE MATERIAL TO A SURFACE OF A TURBOMACHINE CASING

(30) Priorité: 22.02.2016 FR 1651430
(43) Date de publication de la demande: 02.01.2019
(73) Titulaire: Safran Aircraft Engines, 75015 Paris (FR)
(72) Inventeur: MATHON, Richard, 77550 MOISSY-CRAMAYEL (FR); JAUSSAUD, Raoul, 77550 MOISSY-CRAMAYEL (FR); MAGNAUDEIX, Dominique, Michel, Serge, 77550 MOISSY-CRAMAYEL (FR)
(74) Mandataire: Ernest Gutmann - Yves Plasseraud S.A.S.
(86) Numéro de dépôt international: PCT/FR2017/050353
(87) Numéro de publication internationale: WO 2017/144801

(56) Documents cités:
- WO-A1-2016/203141
- US-A- 3 487 519
- US-A- 4 329 308
- US-A1- 2004 146 393
- US-A1- 2014 367 921

## Description

La présente invention concerne un dispositif d'application de matériau abradable, destiné à l'application de matériau abradable sur une surface d'un carter de turbomachine, par exemple une surface interne dudit carter.

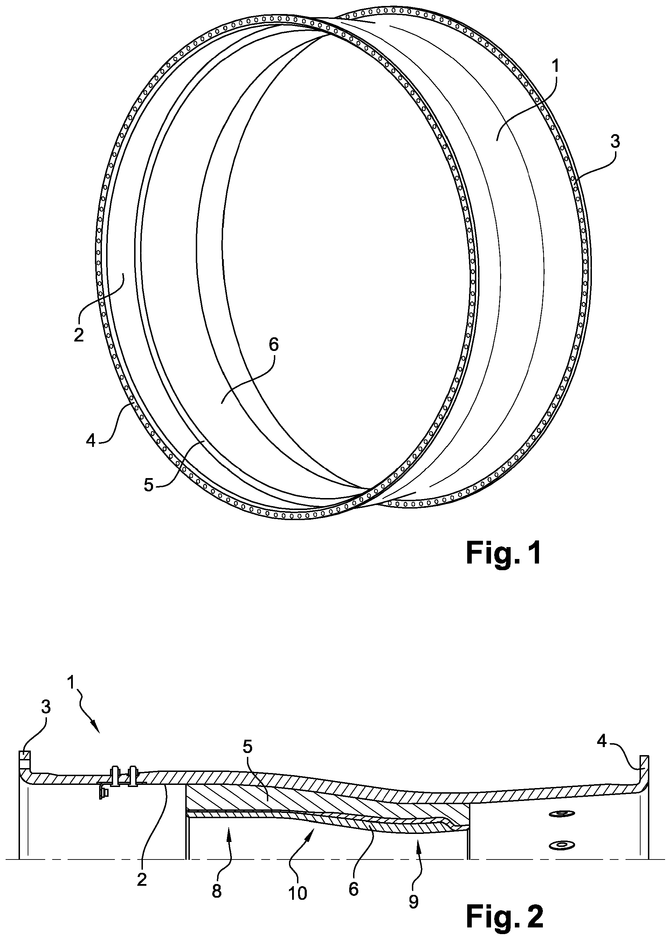

Comme cela est illustré à la figure 1, une turbomachine, telle qu'un turboréacteur ou un turbopropulseur d'avion, comprend classiquement un carter de soufflante 1 dont une paroi 2 sensiblement cylindrique entoure notamment les aubes de la soufflante.

Le carter 1 fait partie d'une nacelle qui entoure le moteur de la turbomachine et à l'intérieur de laquelle tourne une soufflante qui génère un flux d'air secondaire qui s'écoule entre la nacelle et le moteur et forme une partie de la poussée produite par la turbomachine.

Le carter 1 comprend une paroi sensiblement cylindrique 2 qui comporte à ses extrémités longitudinales des brides annulaires de fixation 3, 4. La bride aval 4 est fixée par des moyens du type vis-écrou à une bride (non représentée) d'un carter intermédiaire et la bride amont 3 est fixée par des moyens du type vis-écrou à une bride (non représentée) d'une manche d'entrée d'air dans la nacelle. Les termes amont et aval sont définis par rapport à l'écoulement du flux de gaz au travers de la turbomachine.

La surface interne d'un carter de soufflante 2 comporte classiquement des panneaux annulaires d'isolation acoustique qui recouvrent la surface cylindrique interne de la paroi 2 et qui sont fixés à cette paroi par tous moyens appropriés. Ces panneaux ont en général une structure annulaire en nid d'abeille, formée d'alvéoles adjacents, dont les faces interne et/ou externe sont chacune recouvertes d'un revêtement, également appelé peau. Ces panneaux sont notamment destinés à absorber les ondes sonores générées par la soufflante de la turbomachine. Le carter 1 comporte plus particulièrement un panneau amont, situé en amont des aubes de la soufflante, un panneau médian 5, situé en regard des aubes de la soufflante, et un panneau aval, situé en aval des aubes de la soufflante. Le panneau médian 5 supporte une couche 6 de matériau abradable contre laquelle les extrémités radialement externes des aubes sont destinées à frotter en fonctionnement.

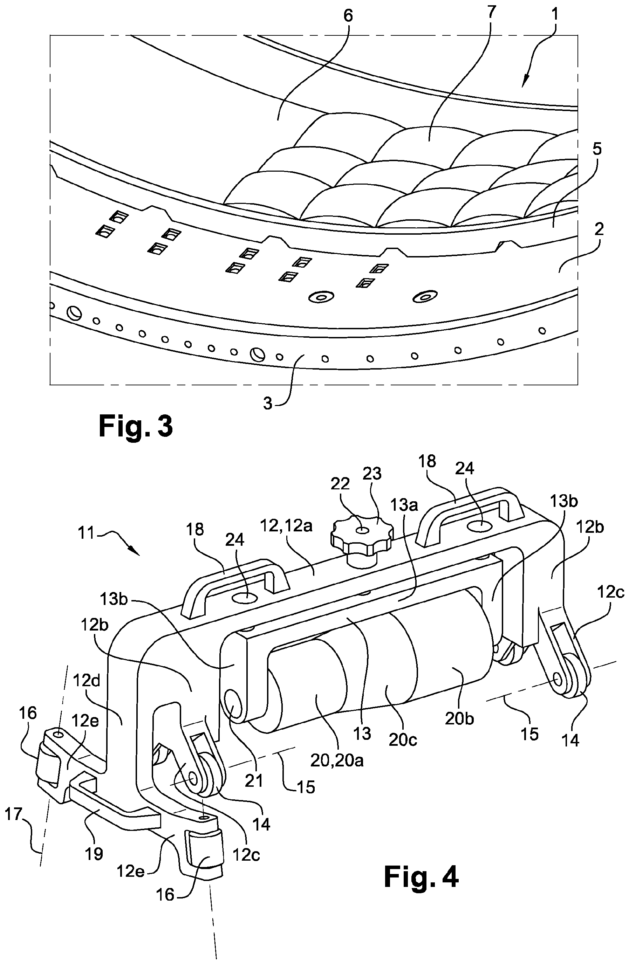

Afin de réaliser la couche 6 de matériau abradable, des portions 7 de pâte de matériau abradable se présentant sous la forme de boules ou de portions sont disposées manuellement sur la peau interne du panneau médian 5, comme illustré à la figure 3, puis la surface radialement interne de la couche de matériau abradable 6 est réalisée manuellement par raclage à l'aide d'un couteau de forme. Plus particulièrement, différents couteaux sont utilisés successivement, de manière à réaliser une ou plusieurs passes d'ébauches, et au moins une passe de finition.

On obtient, dans le cas de la forme de réalisation illustrée à la figure 2, une couche d'abradable 6 dont la surface interne présente une partie amont cylindrique 8, une partie aval cylindrique 9 de plus forte épaisseur que la partie amont, et une partie tronconique 10 reliant les parties amont et aval.

On laisse ensuite la couche abradable 6 sécher à l'air libre afin qu'elle durcisse et présente les caractéristiques mécaniques nécessaires.

Un tel procédé de fabrication est long, pénible et coûteux. Par ailleurs, les couteaux servant au raclage ont tendance à arracher de la matière et à former des défauts de surface qu'il faut ensuite combler. Lors d'un tel comblement, du matériau abradable est à nouveau ajouté, cet ajout pouvant présenter une couleur différente du matériau d'origine. La surface interne de la couche d'abradable obtenue après un tel comblement présente alors des défauts esthétiques.

Le document US4329308 décrive un outillage pour fabriquer un joint d'étanchéité annulaire abradable du genre destiné à réduire, dans un étage de turbomachine axiale, les écoulements de fuite entre les extrémités de pales des ailettes du rotor et la paroi interne cylindrique du stator.

L'invention a notamment pour but d'apporter une solution simple, efficace et économique à ce problème.

A cet effet, elle propose un dispositif d'application de matériau abradable, destiné à l'application de matériau abradable sur une surface d'un carter annulaire de turbomachine, le carter s'étendant suivant un axe longitudinal, le dispositif comportant un support équipé de premiers moyens de guidage aptes à guider le support par rapport à un carter, selon une direction radiale par rapport à l'axe du carter, le support étant équipé de seconds moyens de guidage aptes à guider le support par rapport au carter selon une direction axiale, un rouleau d'application étant monté pivotant par rapport au support selon la direction axiale, des moyens de réglage permettant d'ajuster la position du rouleau par rapport aux premier moyens de guidage, selon la direction radiale.

Un tel dispositif peut être utilisé pour répartir facilement et rapidement du matériau abradable sur la peau interne d'un panneau médian de carter de soufflante par exemple. Pour cela, un dispositif du type précité peut être monté sur le carter, de façon à ce que les premiers moyens de guidage prennent par exemple appui radialement sur la surface radialement interne du carter, et de façon à ce que les seconds moyens de guidage prennent par exemple appui axialement sur une bride d'extrémité du carter. Il suffit alors de déplacer le dispositif par rapport au carter de façon à ce que le rouleau pivote et soit en appui sur le matériau abradable sous forme de pâte, le rouleau répartissant ainsi le matériau abradable malléable sur la surface correspondante, afin d'obtenir le profil souhaité.

Plusieurs passages du rouleau sur la pâte peuvent être nécessaires afin d'obtenir une répartition homogène du matériau abradable.

Les moyens de réglage peuvent permettre de réaliser une ou plusieurs passes d'ébauches, puis une ou plusieurs passes de finition. Dans ce cas, la position du rouleau par rapport à la surface cylindrique sur laquelle est apposé le matériau abradable peut être ajustée entre chaque passe à l'aide desdits moyens de réglage.

Les premiers moyens de guidage peuvent comporter des moyens de roulement aptes à prendre appui sur le carter dans la direction radiale et aptes à se déplacer sur ledit carter.

Par ailleurs, les seconds moyens de guidage peuvent comporter des moyens de roulement aptes à prendre appui sur le carter dans la direction axiale et aptes à se déplacer sur ledit carter.

On réduit ainsi les frottements lors du déplacement du dispositif par rapport au carter, ce qui permet d'éviter toute dégradation du carter et facile la mise en œuvre du dispositif.

Le support comporte une première partie et une seconde partie mobile selon la direction radiale par rapport à la première partie, le rouleau étant monté pivotant sur la seconde partie du support, les premiers moyens de guidage et les seconds moyens de guidage étant montés sur la première partie du support.

Dans ce cas, les moyens de réglage sont montés entre la première partie et la seconde partie du support et sont conçus pour ajuster la position de la seconde partie par rapport à la première partie, dans la direction radiale.

Les moyens de réglage comportent au moins une vis coopérant avec au moins un écrou, le pivotement de la vis par rapport à l'écrou entraînant le déplacement en translation de la seconde partie par rapport à la première partie.

Des moyens de guidage en translation de la seconde partie par rapport à la première partie, selon la direction radiale, peuvent être prévus. De tels moyens de guidage peuvent par exemple comporter au moins une tige ou au moins une colonnette de guidage solidaire de l'une des parties du support, la tige ou la colonnette étant montée déplaçable en translation dans un trou ou une bague de guidage de l'autre partie du support, par exemple.

Le support peut comporter des moyens de préhension, par exemple au moins une poignée.

En particulier, au moins une première poignée peut être orientée de façon à faciliter l'application des premier moyens de guidage en appui sur le carter, selon la direction radiale, et au moins une seconde poignée peut être orientée de façon à faciliter l'application des seconds moyens de guidage en appui sur le carter, selon la direction axiale.

Le rouleau peut comporter au moins deux parties aptes à pivoter indépendamment l'une de l'autre, par exemple au moins une partie cylindrique et au moins une partie tronconique.

Le rouleau peut par exemple comporter deux parties d'extrémité cylindriques, de diamètres différents, et une partie médiane tronconique, la surface du rouleau étant de préférence continue d'une partie à l'autre.

Le rouleau peut également comporter au moins deux parties ayant des profils différents et/ou encore des états de surface différents.

La formation du rouleau en plusieurs parties permet de limiter les phénomènes de glissement à l'interface entre le rouleau et le matériau abradable, de façon à éviter le décollement ou l'arrachage de matériau abradable lors de son application. On évite ainsi d'avoir à combler de telles zones décollées ou arrachées.

L'invention concerne également un procédé d'application de matériau abradable sur un carter de turbomachine, comportant les étapes consistant à :
- appliquer de la pâte de matériau abradable sur une surface annulaire du carter,
- monter un dispositif du type précité sur le carter, de façon à ce que les premiers moyens de guidage prennent appui radialement sur une surface annulaire du carter, par exemple une surface radialement interne, et de façon à ce que les seconds moyens de guidage prennent appui axialement sur une surface d'appui du carter, par exemple sur une bride d'extrémité du carter,
- déplacer relativement le dispositif par rapport au carter de façon à ce que le rouleau pivote et soit en appui sur le matériau abradable sous forme de pâte, le rouleau répartissant ainsi le matériau abradable sous forme de pâte sur la surface correspondante.

Comme indiqué précédemment, un tel procédé peut comporter une ou plusieurs passes d'ébauches, puis une ou plusieurs passes de finition. Pour cela, la position radiale du rouleau par rapport à la surface cylindrique sur laquelle est apposé le matériau abradable peut être ajustée entre chaque passe à l'aide des moyens de réglage.

Selon une variante de réalisation, il est possible de procéder par sections angulaires de la surface interne du carter. Ainsi, il est possible d'appliquer la pâte et de déplacer le dispositif précité sur une section angulaire de la surface interne du carter, puis le carter peut être pivoté autour de son axe d'un angle déterminé, avant d'appliquer la pâte et de déplacer le dispositif précité sur une nouvelle section angulaire de la surface interne du carter.

Le procédé peut également comporter une étape de séchage du matériau, par exemple à l'air libre.

Le matériau abradable utilisé est par exemple un matériau polymère à base de résine époxyde et comprenant des billes creuses, par exemple des billes creuses en verre.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue en perspective d'un carter de soufflante de turbomachine comportant une couche de matériau abradable,
- la figure 2 est une demi-vue en coupe illustrant une section du carter de soufflante de la figure 1,
- la figure 3 est une vue schématique de détail illustrant notamment la pose de portions de pâte de matériau abradable sur la surface cylindrique correspondante du carter de soufflante,
- la figure 4 est une vue en perspective du dispositif selon l'invention,
- la figure 5 est une vue de face du dispositif de la figure 4,
- la figure 6 représente le procédé d'application du matériau abradable selon une forme de réalisation de l'invention dans laquelle l'axe du carter est orienté verticalement,
- la figure 7 représente le procédé d'application du matériau abradable selon une forme de réalisation de l'invention dans laquelle l'axe du carter est orienté horizontalement.

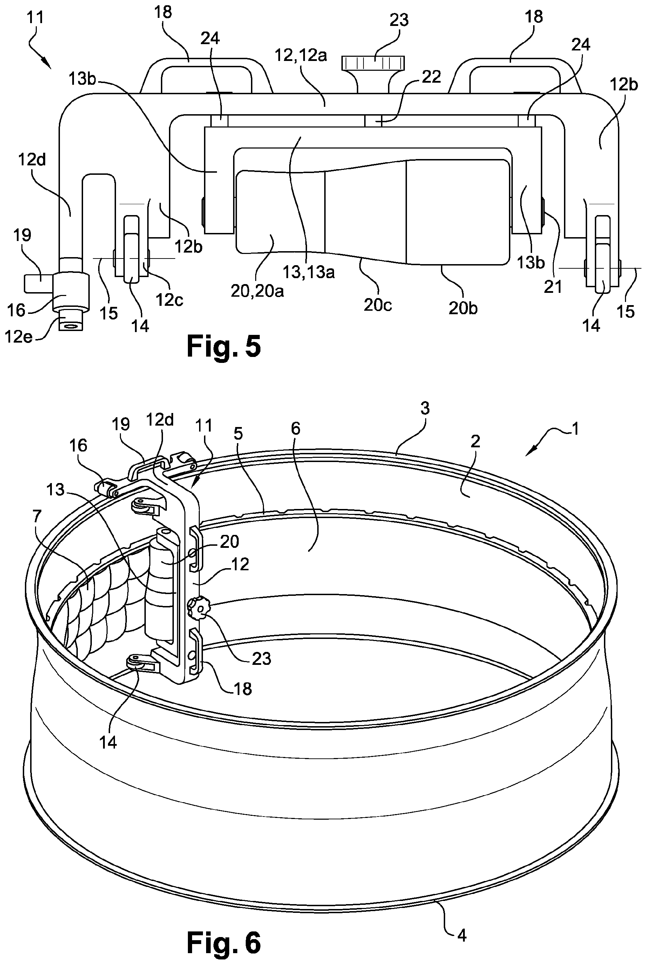

Les figures 4 et 5 représentent un dispositif 11 d'application de matériau abradable, destiné à l'application de matériau abradable sur une surface d'un carter 1 de turbomachine.

Le dispositif 11 comporte un support comprenant une première partie 12 et une seconde partie 13. La première partie 12 présente, en vue de face, une forme générale en U comprenant une base 12a à partir de laquelle s'étendent deux branches 12b. L'extrémité libre de chaque branche 12b comporte deux jambes opposées 12c, chaque jambe 12c portant un galet de roulement 14 dont les axes de rotation 15 sont parallèles à la base 12a. La première partie 12 du support comporte en outre une branche additionnelle 12d, s'étendant depuis une extrémité latérale de la base 12a et s'étendant parallèlement aux branches 12b. L'extrémité libre de la branche additionnelle 12d comporte deux jambes 12e opposées portant chacune un galet de roulement 16 dont l'axe de rotation 17 est parallèle aux branches 12b, 12d c'est-à-dire perpendiculaire aux axes de rotation 15 des galets 14.

Deux poignées de préhension 18 sont fixées au niveau de la base 12a et une poignée 19 est fixée au niveau des jambes 12e de la branche additionnelle 12d.

La seconde partie 13 du support est montée entre les branches 12b de la première partie 12, la seconde partie 13 présentant une forme générale de U et comprenant une base 13a de part et d'autre de laquelle s'étendent deux branches 13b. Un rouleau 20 est monté pivotant autour d'un arbre 21 s'étendant parallèlement aux axes 15 de pivotement des galets 14. Les extrémités de l'arbre 21 sont engagées dans les branches 13b de la seconde partie 13, cette dernière formant ainsi une chape. Le rouleau 20 est formé de trois parties 20a, 20b, 20c aptes à pivoter autour de l'arbre 21 indépendamment les unes des autres. En particulier, le rouleau 21 comporte deux parties cylindriques 20a, 20b de diamètres différents, reliées par une partie médiane tronconique 20c. La partie 20a située à proximité de la branche additionnelle 12d a par exemple un diamètre plus faible que la partie 20b. Les différentes parties 20a, 20b, 20c sont dimensionnées de façon à assurer une continuité de surface du rouleau 20.

Le support 12, 13 est équipé de moyens de réglage de la position du rouleau 20. Lesdits moyens de réglage comportent un écrou formé ou monté dans la base 13a de la seconde partie 13 par exemple, et une vis 22 engagée à pivotement dans la base 12a de la première partie 12. La vis 22 est équipée d'une tête de préhension 23. La vis 22 et l'écrou correspondant sont agencés de façon à ce la rotation de la vis 22 permet de modifier la position de la seconde partie 13 par rapport à la première partie 12, selon l'axe de la vis 22, c'est-à-dire selon un axe perpendiculaire à l'axe du rouleau 20.

Afin de guider un tel déplacement en translation, le support 12, 13 peut être équipé de tiges de guidage 24 disposées par exemple latéralement de part et d'autre de la vis 22 et de l'écrou. En particulier, les tiges 24 peuvent être fixées à la base 12a de la première partie 12 et être engagées dans des trous de section correspondante ou dans des bagues de guidage de la seconde partie 13.

De la même manière, l'outil peut permettre un réglage dans le sens axial, par exemple, entre les parties 12d et 12b, on pourrait avoir également un moyen de réglage qui permettrait de pouvoir adapter l'invention à des tailles différentes de carter.

Comme cela est représenté à la figure 6, un tel dispositif 11 peut être utilisé pour former la couche 6 de matériau abradable d'un carter de soufflante 1 d'une turbomachine, telle qu'un turboréacteur d'avion.

Dans le cas illustré à la figure 6, le carter de soufflante 1 est disposé de telle façon que son axe s'étende verticalement, du matériau abradable sous forme de pâte étant appliqué, par exemple en portions 7, sur une zone à recouvrir, par exemple sur la peau radialement interne d'un panneau 5 du carter de soufflante 1. Le matériau abradable utilisé est par exemple un matériau polymère à base de résine époxyde et comprenant des billes creuses, par exemple des billes creuses en verre.

Le dispositif 11 précité est ensuite disposé sur le carter 1 de façon à ce que le rouleau 20 s'étende selon l'axe du carter 1, que les galets 16 prennent appui sur l'une des brides d'extrémité 3, 4 du carter 1 et que les galets 14 prennent appui sur la surface radialement interne 2 du carter 1, axialement de part et d'autre du panneau 5 portant le matériau abradable.

Les galets 14, 16 sont maintenus au contact des zones concernées du carter 1 par appui d'un opérateur sur les poignées 18, 19. Les poignées 18 servent ainsi à maintenir radialement le dispositif 11 sur la surface interne 2 du carter 1 et la poignée 19 sert à maintenir axialement le dispositif 11 sur la bride d'extrémité correspondante 3, 4.

Le dispositif 11 est alors déplacé par rapport au carter 2 sur toute la périphérie du carter 1 de façon à aplanir le matériau abradable sous forme de pâte et définir la couche de matériau abradable 6. Lors de cette étape, les différentes parties 20a, 20b, 20c du rouleau 20 pivotent autour de leur axe 21 et viennent appuyer ou repousser la pâte malléable. On notera que, la formation du rouleau 20 en plusieurs parties 20a, 20b, 20c permet de limiter les phénomènes de glissement à l'interface entre le rouleau 20 et le matériau abradable, de façon à éviter le décollement ou l'arrachage de matériau abradable lors de son application.

Une ou plusieurs passes d'ébauches, puis une ou plusieurs passes de finition peuvent être réalisées successivement. A cet effet, la position radiale du rouleau 20 par rapport à la surface cylindrique sur laquelle est apposée le matériau abradable peut être ajustée entre chaque passe à l'aide de la vis de réglage 23.

A l'issue des différentes passes, la surface radialement interne de la couche de matériau abradable 6 présente deux sections cylindriques 8, 9 de diamètres différents et une section tronconique 10 reliant les deux sections cylindriques (figure 2).

On laisse ensuite la couche abradable 6 sécher à l'air libre afin qu'elle durcisse et présente les caractéristiques mécaniques nécessaires.

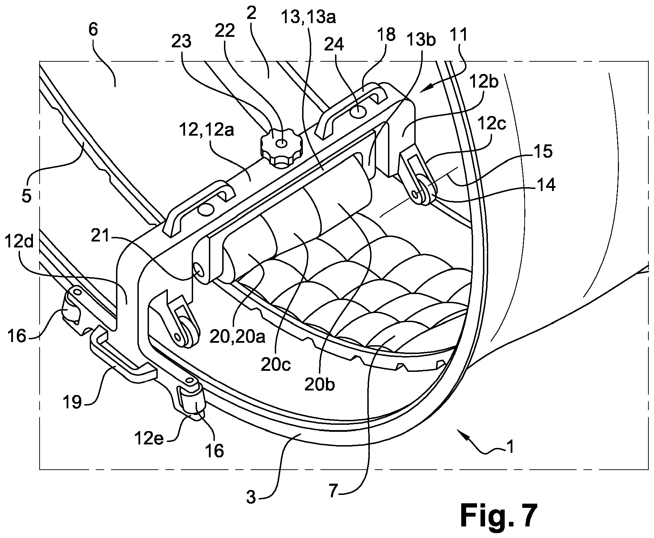

La figure 7 illustre une variante de réalisation dans laquelle le carter 1 est positionné de façon à ce que son axe s'étende horizontalement.

L'invention propose ainsi un dispositif et un procédé permettant de former aisément et rapidement la couche de matériau abradable 6 d'un carter de soufflante 1 de turbomachine par exemple.

## Revendications

1. Dispositif (11) d'application de matériau abradable, destiné à l'application de matériau abradable sur une surface d'un carter annulaire (1) de turbomachine, le carter s'étendant suivant un axe longitudinal, le dispositif (11) comportant un support (12, 13) équipé de premiers moyens de guidage (14) aptes à guider le support (12, 13) par rapport à un carter (1), selon une direction radiale par rapport à l'axe du carter, le support (12, 13) étant équipé de seconds moyens de guidage (16) aptes à guider le support (12, 13) par rapport au carter (1) selon une direction axiale du carter, un rouleau d'application (20) étant monté pivotant par rapport au support (12, 13) selon la direction axiale, des moyens de réglage (22, 23) permettant d'ajuster la position du rouleau (20) par rapport aux premier moyens de guidage (14), selon la direction radiale, le support comportant une première partie (12) et une seconde partie (13) mobile selon la direction radiale par rapport à la première partie (12), le rouleau (20) étant monté pivotant sur la seconde partie (13) du support, les premiers moyens de guidage (14) et les seconds moyens de guidage (16) étant montés sur la première partie (13) du support, les moyens de réglage (22, 23) étant montés entre la première partie (12) et la seconde partie (13) du support et étant conçus pour ajuster la position de la seconde partie (13) par rapport à la première partie (12), dans la direction radiale, les moyens de réglage comportant au moins une vis (22) coopérant avec au moins un écrou, le pivotement de la vis (22) par rapport à l'écrou entraînant le déplacement en translation de la seconde partie (13) par rapport à la première partie (12).

2. Dispositif (11) selon la revendication 1, **caractérisé en ce que** les premiers moyens de guidage comportent des moyens de roulement (14) aptes à prendre appui sur le carter (1) dans la direction radiale et aptes à se déplacer sur ledit carter (1).

3. Dispositif (11) selon la revendication 1 ou 2, **caractérisé en ce que** les seconds moyens de guidage comportent des moyens de roulement (16) aptes à prendre appui sur le carter (1) dans la direction axiale et aptes à se déplacer sur ledit carter (1).

4. Dispositif (11) selon l'une des revendications 1 à 3, **caractérisé en ce qu'**il comporte des moyens (24) de guidage en translation de la seconde partie (13) par rapport à la première partie (12), selon la direction radiale.

5. Dispositif (11) selon l'une des revendications 1 à 4, **caractérisé en ce que** le support (13, 14) comporte des moyens de préhension, par exemple au moins une poignée (18, 19).

6. Dispositif (11) selon l'une des revendications 1 à 5, **caractérisé en ce que** le rouleau (20) comporte au moins deux parties (20a, 20b, 20c) aptes à pivoter indépendamment l'une de l'autre, par exemple au moins une partie cylindrique (20a, 20b) et au moins une partie tronconique (20c).

7. Procédé de d'application de matériau abradable sur un carter (1) de turbomachine, comportant les étapes consistant à :
- appliquer de la pâte de matériau abradable (6, 7) sur une surface annulaire du carter (1),
- monter un dispositif (11) selon l'une des revendications 1 à 6 sur le carter (1), de façon à ce que les premiers moyens de guidage (14) prennent appui radialement sur une surface annulaire (2) du carter (1), par exemple une surface radialement interne (2), et de façon à ce que les seconds moyens de guidage (16) prennent appui axialement sur une surface d'appui du carter (1) par exemple sur une bride d'extrémité (3, 4) du carter (1),
- déplacer relativement le dispositif (11) par rapport au carter (1) de façon à ce que le rouleau (20) pivote et soit en appui sur le matériau abradable (6, 7) sous forme de pâte, le rouleau (20) répartissant ainsi le matériau abradable (6, 7) sous forme de pâte sur la surface correspondante.

## Patentansprüche

1. Vorrichtung (11) zum Auftragen von abreibbarem Material, die zum Auftragen von abreibbarem Material auf eine Fläche eines ringförmigen Gehäuses (1) einer Turbomaschine bestimmt ist, wobei sich das Gehäuse entlang einer Längsachse erstreckt, wobei die Vorrichtung (11) einen Träger (12, 13) enthält, der mit ersten Führungsmitteln (14) ausgestattet ist, die dazu geeignet sind, den Träger (12, 13) in Bezug auf ein Gehäuse (1) in einer radialen Richtung bezüglich der Achse des Gehäuses zu führen, wobei der Träger (12, 13) mit zweiten Führungsmitteln (16) ausgestattet ist, die dazu geeignet sind, den Träger (12, 13) in Bezug auf das Gehäuse (1) in einer axialen Richtung des Gehäuses zu führen, wobei eine Auftragswalze (20) in Bezug auf den Träger (12, 13) in der axialen Richtung schwenkbar gelagert ist, wobei Einstellmittel (22, 23) es ermöglichen, die Position der Walze (20) in Bezug auf die ersten Führungsmittel (14) in der radialen Richtung einzustellen, wobei der Träger einen ersten Abschnitt (12) und einen zweiten Abschnitt (13) enthält, der in radialer Richtung in Bezug auf den ersten Abschnitt (12) beweglich ist, wobei die Walze (20) am zweiten Abschnitt (13) des Trägers schwenkbar gelagert ist, wobei die ersten Führungsmittel (14) und die zweiten Führungsmittel (16) an dem ersten Abschnitt (13) des Trägers gelagert sind, wobei die Einstellmittel (22, 23) zwischen dem ersten Abschnitt (12) und dem zweiten Abschnitt (13) des Trägers gelagert und dazu ausgelegt sind, die Position des zweiten Abschnitts (13) relativ zum ersten Abschnitt (12) in radialer Richtung einzustellen, wobei die Einstellmittel mindestens eine Schraube (22) enthalten, die mit mindestens einer Mutter zusammenwirkt, wobei das Verschwenken der Schraube (22) in Bezug auf die Mutter die Verschiebung des zweiten Abschnitts (13) in Bezug auf den ersten Abschnitt (12) bewirkt.

2. Vorrichtung (11) nach Anspruch 1 , **dadurch gekennzeichnet, dass** die ersten Führungsmittel Rollmittel (14) enthalten, die dazu geeignet sind, sich in radialer Richtung auf dem Gehäuse (1) abzustützen und sich auf dem Gehäuse (1) zu verlagern.

3. Vorrichtung (11) nach Anspruch 1 oder 2, **dadurch gekennzeichnet, dass** die zweiten Führungsmittel Rollmittel (16) enthalten, die dazu geeignet sind, sich in axialer Richtung auf dem Gehäuse (1) abzustützen und sich auf dem Gehäuse (1) zu verlagern.

4. Vorrichtung (11) nach einem der Ansprüche 1 bis 3, **dadurch gekennzeichnet, dass** sie Mittel (24) zur translatorischen Führung des zweiten Abschnitts (13) in Bezug auf den ersten Abschnitt (12) in radialer Richtung enthält.

5. Vorrichtung (11) nach einem der Ansprüche 1 bis 4, **dadurch gekennzeichnet, dass** der Träger (13, 14) Greifmittel, beispielsweise mindestens einen Griff (18, 19), enthält.

6. Vorrichtung (11) nach einem der Ansprüche 1 bis 5, **dadurch gekennzeichnet, dass** die Walze (20) mindestens zwei Abschnitte (20a, 20b, 20c), die dazu geeignet sind, sich unabhängig voneinander zu verschwenken, beispielsweise mindestens einen zylindrischen Abschnitt (20a, 20b) und mindestens einen kegelstumpfförmigen Abschnitt (20c), enthält.

7. Verfahren zum Auftragen von abreibbarem Material auf ein Gehäuse (1) einer Turbomaschine, umfassend die folgenden Schritte:
- Auftragen von Paste aus abreibbarem Material (6, 7) auf eine ringförmige Fläche des Gehäuses (1),
- Montieren einer Vorrichtung (11) nach einem der Ansprüche 1 bis 6 an das Gehäuse (1), so dass die ersten Führungsmittel (14) sich radial an einer ringförmigen Fläche (2) des Gehäuses (1), beispielsweise einer radial inneren Fläche (2), abstützen und so dass die zweiten Führungsmittel (16) sich axial an einer Auflagefläche des Gehäuses (1), beispielweise an einem Endflansch (3, 4) des Gehäuses (1), abstützen,
- Verlagern der Vorrichtung (11) relativ zum Gehäuse (1), so dass sich die Walze (20) verschwenkt und auf dem abreibbaren Material (6, 7) in Form von Paste aufliegt, wobei die Walze (20) dadurch das abreibbare Material (6, 7) in Form von Paste auf der entsprechenden Fläche verteilt.

## Claims

1. Device (11) for applying abradable material, designed to apply abradable material to a surface of an annular casing (1) of a turbine engine, wherein the casing extends along a longitudinal axis and the device (11) comprises a support (12, 13) equipped with first guiding means (14) capable of guiding the support (12, 13) in relation to a casing (1) in a radial direction in relation to the axis of the casing, the support (12, 13) being equipped with second guiding means (16) capable of guiding the support (12, 13) in relation to the casing (1) in an axial direction of the casing, an application roller (20) being pivotally mounted in relation to the support (12, 13) in the axial direction and adjustment means (22, 23) allowing adjustment of the position of the roller (20) in relation to the first guiding means (14), in the radial direction, the support comprising a first part (12) and a second part (13) movable in the radial direction in relation to the first part (12), with the roller (20) being pivotally mounted on the second part (13) of the support and the first guiding means (14) and the second guiding means (16) being mounted on the first part (13) of the support, the adjustment means (22, 23) being be mounted between the first part (12) and the second part (13) of the support and are designed to adjust the position of the second part (13) in relation to the first part (12), in the radial direction, the adjustment means comprising at least one screw (22) interacting with at least one nut, with pivoting of the screw (22) in relation to the nut causing translational movement of the second part (13) in relation to the first part (12).

2. Device (11) according to claim 1, **characterised in that** the first guiding means may comprise rolling means (14) capable of bearing on the casing (1) in the radial direction and capable of moving on said casing (1).

3. Device (11) according to claim 1 or 2, **characterised in that** the second guiding means may comprise rolling means (16) capable of bearing on the casing (1) in the axial direction and capable of moving on said casing (1).

4. Device (11) according to any of claims 1 to 3, **characterised in that** it comprises translational guiding means (24) for guiding the second part (13) in relation to the first part (12), in the radial direction.

5. Device (11) according to any of claims 1 to 4, **characterised in that** the support (13, 14) comprises gripping means, for example at least one handle (18, 19).

6. Device (11) according to any of claims 1 to 5, **characterised in that** the roller (20) comprises at least two parts (20a, 20b and 20c) capable of pivoting independently of each other, for example at least one cylindrical part (20a, 20b) and at least one frustoconical part (20c).

7. Method for applying abradable material to a turbine engine casing (1), comprising the stages involving:
- applying abradable material paste (6, 7) to an annular surface of the casing (1),
- mounting a device (11) according to any of claims 1 to 6 on the casing (1) in such a manner that the first guiding means (14) bear radially on an annular surface (2) of the casing (1), for example a radially inner surface (2) and in such a manner that the second guiding means (16) bear axially on a bearing surface of the casing (1), for example on an end flange (3, 4) of the casing (1),
- moving the device (11) relatively in relation to the casing (1) so that the roller (20) pivots and rests on the abradable material (6, 7) in paste form, the roller (20) thus distributing the malleable abradable material (6, 7) in paste form on the corresponding surface.
